# EUROPEAN PATENT APPLICATION

(11) **EP 4 407 719 A1**
(43) Date of publication of application: **31.07.2024**
(21) Application number: 22941008.9
(22) Date of filing: 07.05.2022
(51) Int. Cl.: H01M 4/66, H01M 4/80, H01M 4/64, H01M 10/0525

(54) **NEGATIVE POLE PIECE, ELECTRODE ASSEMBLY, BATTERY CELL, BATTERY AND ELECTRICAL APPARATUS**

(71) Applicant: Contemporary Amperex Technology Co., Limited, Ningde, Fujian 352100 (CN)
(72) Inventor: CHEN, Yujie, Ningde, Fujian 352100 (CN); GE, Xiaoming, Ningde, Fujian 352100 (CN); WANG, Yiheng, Ningde, Fujian 352100 (CN)
(74) Representative: Gong, Jinping
(86) International application number: PCT/CN2022/091552
(87) International publication number: WO 2023/216039

(57) **Abstract**

The present application provides a negative electrode sheet, an electrode assembly, a battery cell, a battery, and an electrical device, belonging to the field of battery technology. The negative electrode sheet includes a porous matrix and a first insulator. The porous matrix has a first surface area in its thickness direction. A first insulator clads at least a partial metal surface of the first surface area. The negative electrode sheet with this structure makes it difficult for lithium ions to obtain electrons on the surface of the porous matrix during use, which can effectively alleviate precipitation of lithium metal and formation of dendritic crystals on the surface of the negative electrode sheet. This can effectively reduce surface expansive deformation of the negative electrode sheet during lithium precipitation, can alleviate damage to the separator by the dendritic crystals formed by deposition of the lithium metal on the surface of the negative electrode sheet, and is conducive to reducing safety hazards such as short-circuiting in a battery cell with this negative electrode sheet during use to improve the use safety of the battery cell.

## Description

### Technical Field

The present application relates to the field of battery technology, and in particular, to a negative electrode sheet, an electrode assembly, a battery cell, a battery, and an electrical device.

### Background Art

In recent years, new energy vehicles have developed with a great leap. In the field of electric vehicles, power batteries play an irreplaceable and important role as power sources of the electric vehicles. With the vigorous promotion of new energy vehicles, the demand for power battery products is increasing. As a core component of new energy vehicles, batteries have high requirements in terms of service life, safety, or the like. A battery cell of a battery is obtained by assembling a positive electrode sheet, a negative electrode sheet and a separator into an electrode assembly (bare cell) in a winding or laminating manner, then putting the bare cell into a shell, and injecting an electrolytic solution. However, battery cells in existing technologies are prone to safety hazards such as short-circuiting during later use, resulting in significant usage risks of the battery cells.

### Summary

Embodiments of the present application provide a negative electrode sheet, an electrode assembly, a battery cell, a battery, and an electrical device, which can effectively improve the safety of a battery cell.

In a first aspect, an embodiment of the present application provides a negative electrode sheet, including a porous matrix and a first insulator; the porous matrix has a first surface area in its thickness direction; and the first insulator clads at least a partial metal surface of the first surface area.

In the foregoing technical solution, the first insulator is disposed in the first surface area of the porous matrix, and the first insulator can clad at least the partial metal surface of the first surface area, thereby insulating at least the partial metal surface of the first surface area. The negative electrode sheet with this structure makes it difficult for lithium ions to obtain electrons on the surface of the porous matrix during use, which can effectively alleviate precipitation of lithium metal and formation of dendritic crystals on the surface of the negative electrode sheet. This can effectively reduce surface expansive deformation of the negative electrode sheet during lithium precipitation, can alleviate damage to the separator by the dendritic crystals formed by deposition of the lithium metal on the surface of the negative electrode sheet, and is conducive to reducing safety hazards such as short-circuiting in a battery cell with this negative electrode sheet during use to improve the use safety of the battery cell.

In some embodiments, the first insulator clads all the metal surface of the first surface area.

In the foregoing technical solution, all the metal surface of the first surface area is clad with the first insulator, which is beneficial to further reducing the lithium precipitation and the formation of dendritic crystals on the surface of the negative electrode sheet during use, thereby better reducing the safety hazards of short-circuiting caused by the expansive deformation of the battery cell with this negative electrode sheet or the puncture of the separator.

In some embodiments, in the thickness direction of the porous matrix, the porous matrix has the first surface area on two sides.

In the foregoing technical solution, the first surface areas are disposed on the two sides of the porous matrix in the thickness direction to reduce the risks of lithium precipitation and formation of dendritic crystals on two sides of the negative electrode sheet, so that lithium metal precipitates and deposits inside the porous matrix, which is conducive to further improving the safety of use of the battery cell with this negative electrode sheet.

In some embodiments, the two first surface areas have an equal thickness in the thickness direction of the porous matrix.

In the foregoing technical solution, the first surface areas on the two sides of the porous matrix have the same thickness, so that this negative electrode sheet can be applied to a structure with positive electrode sheets on the two sides of the negative electrode sheet, which can expand the application scope of the negative electrode sheet.

In some embodiments, in the thickness direction of the porous matrix, the thickness of one of the two first surface areas is greater than that of the other first surface area.

In the foregoing technical solution, the thickness of the first surface area on one side of the negative electrode sheet is greater than that of the first surface area on the other side, so that the negative electrode sheet can be applied to a structure with a positive electrode sheet on one side of the negative electrode sheet, which can expand the application scope of the negative electrode sheet.

In some embodiments, in the thickness direction of the porous matrix, the thickness of one of the first surface areas is d1, and a thickness of the porous matrix is d2, satisfying 0.01 ≤ d1/d2 ≤ 0.1, and preferably 0.02 ≤ d1/d2 ≤ 0.05.

In the foregoing technical solution, a ratio of the thickness of the first surface area to the thickness of the porous matrix is 1% to 10%, that is, the area coated with the first insulator in the thickness direction of the porous matrix accounts for 1% to 10% of the overall thickness of the porous matrix. This can reduce the risk of still easy extension of deposited lithium metal dendritic crystals out of the porous matrix due to the small thickness of the first surface area, to reduce short-circuiting caused by the puncture of the separator, and can alleviate the phenomenon of a small area for lithium ion reaction in the porous matrix due to the large thickness of the first surface area, to reduce the risk of excessive current density in the porous matrix. In addition, the ratio of the thickness of the first surface area to the thickness of the porous matrix is further set to 2% to 5%, so that an optimal effect is achieved in solving the problem of short-circuiting caused by the puncture of the separator, and unnecessary waste and occupation of too much space of the porous matrix can be reduced.

In some embodiments, in the thickness direction of the porous matrix, the thickness of the first surface area is d1, satisfying d1 ≥ 1 µm.

In the foregoing technical solution, the thickness of the first surface area is greater than or equal to 1 µm, that is, the thickness of the area coated with the first insulator in the thickness direction of the porous matrix is greater than or equal to 1 µm, to effectively prevent lithium precipitation on the surface of the negative electrode sheet, thereby effectively reducing the risk of puncture of the separator by dendritic crystals from the deposition of lithium metal.

In some embodiments, the first insulator clads the metal surface of the first surface area by a thickness of d3, satisfying 10 nm ≤ d3 ≤ 100 nm, and preferably 30 nm ≤ d3 ≤ 50 nm.

In the foregoing technical solution, the thickness by which the first insulator clads the metal surface of the first surface area is 10 nm to 100 nm, which can reduce poor insulating effect caused by the too small thickness of the first insulator. On the other hand, waste of the first insulator caused by the too large thickness of the first insulator can be reduced to reduce the production cost of the negative electrode sheet. Moreover, the thickness by which the first insulator clads the metal surface of the first surface area is further 30 nm to 50 nm, so that the first insulator can well insulate the metal in the first surface layer, and can reduce the risk of shedding of the first insulator during use due to the excessive thickness of the first insulator cladding the metal surface of the first surface area, which is beneficial to improving the performance and service life of the negative electrode sheet.

In some embodiments, the first surface area has a plurality of pores, and a porosity of the first surface area is P, satisfying 20% ≤ P ≤ 95%, and preferably 60% ≤ P ≤ 95%.

In the foregoing technical solution, the porosity of the first surface area is 20% to 95%, which can reduce poor passing of lithium ions due to too small porosity, and can reduce the risk of poor structural strength of the porous matrix due to too large porosity. In addition, the porosity of the first surface area is further 60% to 95% to ensure that lithium ions have good passing ability, so that the lithium ions can enter the interior of the porous matrix for reaction.

In some embodiments, a pore size of the pores is d4, satisfying 50 µm ≤ d4 ≤ 300 µm.

In the foregoing technical solution, the pore size of the first surface area is 50 µm to 300 µm, which can effectively reduce blockage of the pores by the first insulator due to too small pore size to ensure that the lithium ions can enter the interior of the porous matrix through the first surface area, and can reduce the risk of poor structural strength of the porous matrix due to too large pore size.

In some embodiments, a material of the porous matrix is foam metal.

In the foregoing technical solution, by using the porous matrix of the foam metal, the porous matrix reacts directly with the lithium ions, so as to input or output electric energy of the negative electrode sheet. The porous matrix of this structure can achieve lithium precipitation and deposition of lithium ions inside the porous matrix, which is conducive to reducing the risk of lithium precipitation on the surface of the negative electrode sheet.

In some embodiments, the material of the porous matrix is foam copper.

In the foregoing technical solution, the foam copper is used as the material of the porous matrix, so that the porous matrix has good conductivity, which is conducive to reducing internal resistance of the battery cell with the negative electrode sheet to improve the performance of the battery cell.

In some embodiments, a particle size of the first insulator is d5, satisfying d5 ≤ 60 nm.

In the foregoing technical solution, the particle size of the first insulator is less than or equal to 60 nm, which facilitates cladding of the first insulator on the metal of the first surface area in the production process to reduce the risk of detachment of the first insulator, and can alleviate blockage of the pores of the porous matrix by the first insulator due to the excessive particle size of the first insulator.

In some embodiments, a material of the first insulator is aluminum oxide or zirconium oxide.

In the foregoing technical solution, the first insulator made of aluminum oxide or zirconium oxide may have good insulating performance and lower cost, which is beneficial to reducing the production cost of the negative electrode sheet.

In some embodiments, in a direction perpendicular to the thickness direction of the porous matrix, the porous matrix has second surface areas on sides; and the negative electrode sheet further includes a second insulator, and the second insulator clads metal surfaces of the second surface areas.

In the foregoing technical solution, in the direction perpendicular to the thickness direction of the porous matrix, the second surface areas are disposed on the two sides of the porous matrix, and the second insulator clads the metal of the second surface areas. This can effectively alleviate lithium precipitation on the two sides of the porous matrix in the direction perpendicular to the thickness direction of the porous matrix, can further reduce the risk of puncture of the separator by dendritic crystals from the deposition of lithium metal, and is beneficial to improving the safety of use of the battery cell with this negative electrode sheet.

In a second aspect, an embodiment of the present application further provides an electrode assembly, including a positive electrode sheet and the foregoing negative electrode sheet, where the negative electrode sheet and the positive electrode sheet are wound or laminated.

In some embodiments, the metal surface of the first surface area, opposite to the positive electrode sheet, of the negative electrode sheet is clad with the first insulator.

In the foregoing technical solution, the first insulator is disposed on the metal surface of the first surface area, opposite to the positive electrode sheet, of the negative electrode sheet to ensure that the first insulator is disposed in an area with a high reaction density between the first surface area of the negative electrode sheet and the positive electrode sheet, so as to effectively alleviate puncture of the separator by dendritic crystals from the deposition of lithium metal due to lithium precipitation on the surface of the negative electrode sheet, to reduce safety hazards of the electrode assembly during use.

In some embodiments, the porous matrix has the first surface areas on two sides in the thickness direction of the porous matrix, and in the two first surface areas of the outermost negative electrode sheet of the electrode assembly, the thickness of the first surface area facing the positive electrode sheet is less than that of the first surface area away from the positive electrode sheet.

In the foregoing technical solution, in the two first surface areas of the outermost negative electrode sheet of the electrode assembly, the thickness of the first surface area facing the positive electrode sheet is less than that of the first surface area away from the positive electrode sheet, that is, the first surface area of the negative electrode sheet is thicker on the side where the positive electrode sheet is not disposed. The electrode assembly with this structure can reduce the area used for lithium ion reaction in the outermost negative electrode sheet, thereby shortening a migration path of lithium ions and improving the performance of the electrode assembly.

In some embodiments, in the thickness direction of the porous matrix, the thickness of the first surface area on the outermost side of the electrode assembly is d6, and the thickness of the porous matrix is d2, satisfying 0.45 ≤ d6/d2 ≤ 0.55.

In the foregoing technical solution, the ratio of the thickness of the first surface area on the outermost side of the electrode assembly to the thickness of the porous matrix is 45% to 55%, which can reduce an excessive lithium ion migration path caused by the too small thickness of the first surface area away from the positive electrode sheet, and can overcome a too small area for lithium ion reaction in the porous matrix due to the too large thickness of the first surface area away from the positive electrode sheet, to reduce the risk of excessive current density of the porous matrix.

In a third aspect, an embodiment of the present application further provides a battery cell, including a shell and the foregoing electrode assembly, where the electrode assembly is accommodated in the shell.

In a fourth aspect, an embodiment of the present application further provides a battery, including a box and the foregoing battery cell, where the battery cell is accommodated in the box.

In a fifth aspect, an embodiment of the present application further provides an electrical device, including the foregoing battery cell.

In a sixth aspect, an embodiment of the present application further provides a manufacturing method for a negative electrode sheet, including: providing a porous matrix, where the porous matrix has a first surface area in its thickness direction; providing a first insulator; and cladding at least a partial metal surface of the first surface area with the first insulator.

In some embodiments, the cladding at least a partial metal surface of the first surface area with the first insulator includes: filling the porous matrix with a filler; removing the filler from the first surface area; disposing the first insulator in the first surface area, so that at least the partial metal surface of the first surface area is clad with the first insulator; and removing the remaining filler from the porous matrix.

In the foregoing technical solution, by using this manufacturing method, the metal of the first surface area is clad with the first insulator, which can effectively reduce permeation of the first insulator into the interior of the porous matrix in the production process, which is conducive to controlling the thickness of the first surface area. That is, this manufacturing method can accurately control the thickness of the area coated with the first insulator in the thickness direction of the porous matrix, and can effectively improve the quality of cladding of the first insulator on the metal in the first surface area, so as to improve the production quality of the negative electrode sheet.

In some embodiments, the filling the porous matrix with a filler includes: soaking the porous matrix in the liquid filler and removing gas from the porous matrix; and curing the filler in the porous matrix.

In the foregoing technical solution, the porous matrix is soaked in the filler, and finally the filler is cured to fill in the porous matrix, so the method is simple, easy to operate, and beneficial to reducing manufacturing difficulties. Moreover, the gas inside the porous matrix is removed while the porous matrix is soaked in the liquid filler, so that the filler can be densely filled in the porous matrix to reduce poor filling of the filler and ensure subsequent machining quality of the negative electrode sheet.

In some embodiments, the removing the remaining filler from the porous matrix includes: transforming the remaining filler in the porous matrix into liquid, so that the filler is discharged from the porous matrix.

In the foregoing technical solution, the remaining filler in the porous matrix is first transformed into liquid and then discharged from the porous matrix. This manufacturing method facilitates the removal of the filler from the porous matrix, reduces machining difficulties, and can effectively reduce remaining of the filler in the porous matrix, which is conducive to improving the production quality of the negative electrode sheet.

In some embodiments, the filler is a phase change material or a soluble polymer material.

In the foregoing technical solution, the use of a phase change material or a soluble polymer material as the filler facilitates the transformation of the filler into liquid or solid during the production of the negative electrode sheet, thereby reducing machining difficulties of the negative electrode sheet.

In some embodiments, before filling the porous matrix with a filler, the manufacturing method for a negative electrode sheet further includes: cleaning the porous matrix; and/or after removing the remaining filler from the porous matrix, the manufacturing method for a negative electrode sheet further includes: cleaning the porous matrix.

In the foregoing technical solution, the porous matrix is cleaned before the filler is filled in the porous matrix, which is beneficial to reducing burrs or impurities inside the porous matrix, thereby effectively improving subsequent machining quality of the porous matrix. Moreover, the porous matrix with the first insulator is cleaned after the remaining filler is removed from the porous matrix, which is beneficial to reducing the residual filler on the negative electrode sheet, thereby effectively improving the production quality of the negative electrode sheet.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided in some embodiments of the present application;
FIG. 2 is a structural exploded view of a battery provided in some embodiments of the present application;
FIG. 3 is a structural exploded view of a battery cell provided in some embodiments of the present application;
FIG. 4 is a cross-sectional view of an electrode assembly provided in some embodiments of the present application;
FIG. 5 is a partial cross-sectional view of a negative electrode sheet provided in some embodiments of the present application;
FIG. 6 is a partial cross-sectional view of a porous matrix of the negative electrode sheet provided in some embodiments of the present application;
FIG. 7 is a partial cross-sectional view of a negative electrode sheet provided in other embodiments of the present application;
FIG. 8 is a schematic diagram illustrating that a first insulator clads a metal surface of a first surface area provided in some embodiments of the present application;
FIG. 9 is a top view of the porous matrix provided in some embodiments of the present application;
FIG. 10 is a partial cross-sectional view of the first insulator provided in some embodiments of the present application;
FIG. 11 is a cross-sectional view of the negative electrode sheet in a direction perpendicular to the thickness direction of the porous matrix provided in some embodiments of the present application;
FIG. 12 is a schematic flowchart of a manufacturing method for a negative electrode sheet provided in some embodiments of the present application;
FIG. 13 is a schematic flowchart of step S300 of the manufacturing method for a negative electrode sheet provided in some embodiments of the present application;
FIG. 14 is a partial cross-sectional view of the porous matrix provided in some embodiments of the present application after step S310;
FIG. 15 is a partial cross-sectional view of the porous matrix provided in some embodiments of the present application after step S320;
FIG. 16 is a partial cross-sectional view of the porous matrix provided in some embodiments of the present application after step S330;
FIG. 17 is a partial cross-sectional view of the porous matrix provided in some embodiments of the present application after step S340;
FIG. 18 is a schematic flowchart of step S310 of the manufacturing method for a negative electrode sheet provided in some embodiments of the present application;
FIG. 19 is a schematic flowchart of step S340 of the manufacturing method for a negative electrode sheet provided in some embodiments of the present application; and
FIG. 20 is a schematic flowchart of step S300 of the manufacturing method for a negative electrode sheet provided in other embodiments of the present application.

Reference numerals: 1000 - vehicle; 100 - battery; 10 - box; 11 - first box body; 12 - second box body; 20 - battery cell; 21 - shell; 211 - shell body; 2111 - opening; 212 - end cover; 22 - electrode assembly; 221 - negative electrode sheet; 2211 - porous matrix; 2211a - first surface area; 2211b - current collecting area; 2211c - second surface area; 2212 - first insulator; 2213 - second insulator; 222 - separator; 223 - positive electrode sheet; 23 - positive electrode terminal; 24 - negative electrode terminal; 25 - pressure relief mechanism; 200 - controller; 300 - motor; X - thickness direction of the porous matrix.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells or a plurality of battery modules. The box may prevent liquid or other foreign matters from affecting charging or discharging of the battery cells.

The battery cell includes a shell, an electrode assembly and an electrolytic solution, where the shell is used for accommodating the electrode assembly and the electrolytic solution. The electrode assembly consists of a positive electrode sheet, a negative electrode sheet, and a separator. The battery cell mainly relies on migration of metal ions between the positive electrode sheet and the negative electrode sheet to work. The positive electrode sheet includes a positive electrode current collector and a positive electrode active material layer, a surface of the positive electrode current collector is coated with the positive electrode active material layer, and a portion, not coated with the positive electrode active material layer, of the positive electrode current collector serves as a positive electrode tab to input or output electrical energy of the positive electrode sheet. In an example of a lithium-ion battery, a material of the positive electrode current collector may be aluminum, and the positive electrode active material may be lithium cobaltate, lithium iron phosphate, ternary lithium, lithium manganate, or the like. The negative electrode sheet may be made of a foam metal. In order to ensure that no fusing occurs when high current passes through, there is a plurality of positive electrode tabs laminated together, and there is a plurality of negative electrode tabs laminated together.

A material of the separator may be polypropylene (PP), polyethylene (PE), or the like. Moreover, the electrode assembly may be of a wound structure or a laminated structure, and the embodiments of the present application are not limited thereto.

Batteries are an important part of the development of new energy nowadays due to their outstanding advantages such as high energy density, low environmental pollution, high power density, long service life, wide adaptability, and small self-discharge coefficient. A battery cell of a battery is obtained by assembling a positive electrode sheet, a negative electrode sheet and a separator into an electrode assembly (bare cell) in a winding or laminating manner, then putting the bare cell into a shell, closing the bare cell with an end cover, and injecting an electrolytic solution. However, with the continuous development of battery technology, higher requirements are put forward for the performance, safety, and the like of batteries. Therefore, the safety performance of the battery cell determines the safety of the battery during use.

The inventor found, for the ordinary battery cell, the electrode assembly of the battery cell is prone to lithium precipitation during later use of the battery, mainly manifested as lithium metal precipitation on the negative electrode sheet of the electrode assembly, which often leads to expansive deformation of the negative electrode sheet or deposition of dendritic crystals on the surface, causing damage to the separator or a risk of expansion of the battery cell. In order to solve use safety problems caused by the precipitation of lithium metal from the negative electrode sheet, a foam metal is usually used as the negative electrode sheet of the electrode assembly in the existing technologies to achieve the precipitation and deposition of lithium metal inside the negative electrode sheet. However, in the battery cell of this structure, because lithium ions in the electrolytic solution preferentially obtain electrons on the surface of the negative electrode sheet, lithium precipitation still occurs on the surface of the negative electrode, especially on a side, facing the positive electrode sheet, of the negative electrode sheet, which is very likely to cause expansive deformation of the negative electrode or deposition of dendritic crystals on the surface of the negative electrode sheet. As a result, the battery cell expands or the separator is damaged by the dendritic crystals, so that the battery cell has significant safety hazards during later use and is not conducive to the use safety of consumers.

Based on the above considerations, in order to solve the significant safety hazards of the battery cell during the later use, the inventor has conducted in-depth research and designed a negative electrode sheet, including a porous matrix and a first insulator, where the porous matrix has a first surface area in its thickness direction, and the first insulator clads at least a partial metal surface of the first surface area.

In an electrode assembly with such a negative electrode sheet, the first insulator is disposed in the first surface area of the porous matrix, and the first insulator can clad at least the partial metal surface of the first surface area, thereby insulating at least the partial metal surface of the first surface area. The negative electrode sheet with this structure makes it difficult for lithium ions to obtain electrons on the surface of the porous matrix during use, which can effectively alleviate precipitation of lithium metal and formation of dendritic crystals on the surface of the negative electrode sheet. This can effectively reduce surface expansive deformation of the negative electrode sheet during lithium precipitation, can alleviate damage to the separator by the dendritic crystals formed by deposition of the lithium metal on the surface of the negative electrode sheet, and is conducive to reducing safety hazards such as short-circuiting in a battery cell during use to improve the use safety of a battery.

The negative electrode sheet disclosed in the embodiments of the present application may be used, but not limited to, in an electrical device, such as a vehicle, a ship, or an aircraft. A power system of the electrical device may be constituted by the negative electrode sheet, the battery cell, and the like disclosed in the present application, which can effectively reduce the risk of short-circuiting or expansion of the battery cell during later use, so as to improve the safety of use of the battery.

An embodiment of the present application provides an electrical device using a battery as a power source. The electrical device may be, but is not limited to, a mobile phone, a tablet computer, a notebook computer, an electric toy, an electric tool, a scooter, an electric vehicle, a ship, or a spacecraft. The electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by an example of a vehicle 1000 as an electrical device in an embodiment of the present application.

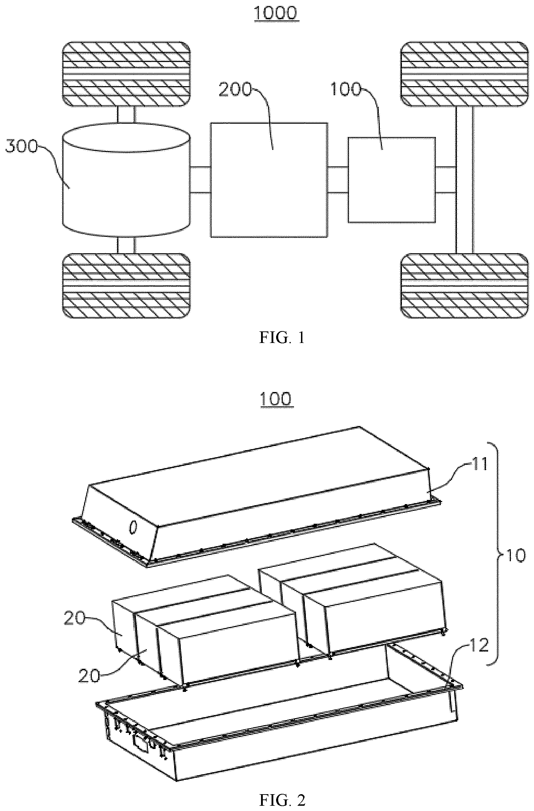

Refer to FIG. 1. FIG. 1 is a schematic structural diagram of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be configured to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is a structural exploded view of a battery 100 provided in some embodiments of the present application. The battery 100 includes a box 10 and battery cells 20, where the battery cells 20 are accommodated in the box 10. The box 10 is used for providing an assembly space for the battery cells 20, and the box 10 may have many structures. In some embodiments, the box 10 may include a first box body 11 and a second box body 12, the first box body 11 and the second box body 12 cover each other, and the first box body 11 and the second box body 12 jointly confine the assembly space for accommodating the battery cells 20. The second box body 12 may be of a hollow structure with an open end, the first box body 11 may be of a plate-like structure, and the first box body 11 covers an open side of the second box body 12, so that the first box body 11 and the second box body 12 jointly confine the assembly space; or each of the first box body 11 and the second box body 12 may be of a hollow structure with an open side, and the open side of the first box body 11 covers the open side of the second box body 12. Of course, the box 10 formed by the first box body 11 and the second box body 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

Each battery cell 20 may be a secondary battery or a primary battery, or may be a lithium-sulfur battery, a sodium-ion battery, or a magnesium-ion battery, but is not limited to this. The battery cell 20 may be cylindrical, flat, cuboid, or in other shapes. For example, in FIG. 2, the battery cell 20 is of a cuboid structure.

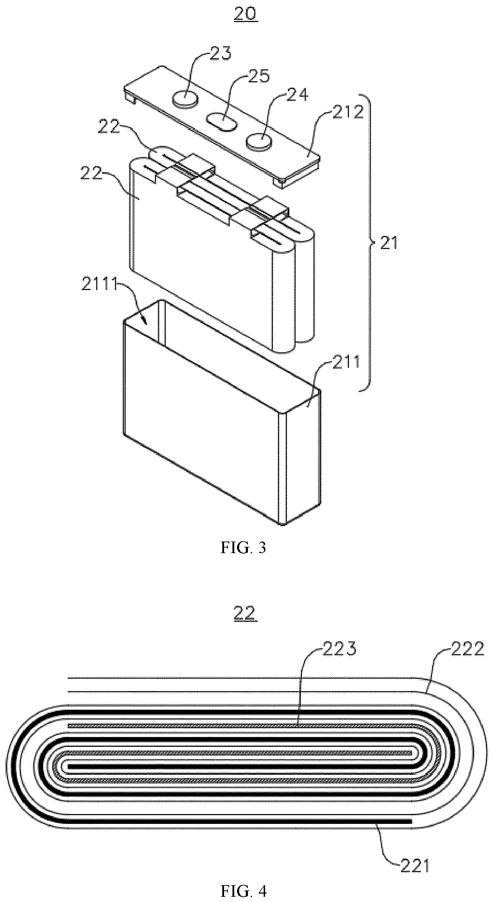

Refer to FIG. 3. FIG. 3 is a structural exploded view of a battery cell 20 provided in some embodiments of the present application. The battery cell 20 includes a shell 21 and an electrode assembly 22, where the shell 21 is used for accommodating the electrode assembly 22.

The shell 21 may also be used for accommodating an electrolyte, such as an electrolytic solution. The shell 21 may be in various structural forms.

In some embodiments, the shell 21 may include a shell body 211 and an end cover 212, the shell body 211 is of a hollow structure with an opening 2111 on one side, and the end cover 212 is used for covering the opening 2111 of the shell body 211 to form a sealed connection, so as to form a sealed space for accommodating the electrode assembly 22 and the electrolyte.

When the battery cell 20 is assembled, the electrode assembly 22 is first put into the shell body 211, the shell body 211 is filled with the electrolyte, and then the cover body 212 is closed to the opening 2111 of the shell body 211.

The shell body 211 may be in various shapes, such as cylindrical or cuboid. The shape of the shell body 211 may be determined according to a specific shape of the electrode assembly 22. For example, if the electrode assembly 22 is of a cylindrical structure, a cylindrical shell body may be used; or if the electrode assembly 22 is of a cuboid structure, a cuboid shell body may be used. Of course, the end cover 212 may also be of various structures, for example, the end cover 212 is of a plate-like structure or a hollow structure with an opening 2111 at one end. For example, in FIG. 3, the electrode assembly 22 is of a cuboid structure. Correspondingly, the shell body 211 is of a cuboid structure, the end cover 212 is of a cuboid plate-like structure, and the end cover 212 covers the opening 2111 of the shell body 211.

In some embodiments, the battery cell 20 may further include a positive electrode terminal 23, a negative electrode terminal 24, and a pressure relief mechanism 25, where the positive electrode terminal 23, the negative electrode terminal 24, and the pressure relief mechanism 25 are all mounted on the end cover 212. The positive electrode terminal 23 and the negative electrode terminal 24 are both used for electrical connection with the electrode assembly 22. The pressure relief mechanism 25 is used for releasing pressure inside the battery cell 20 when the internal pressure or temperature of the battery cell 20 reaches a predetermined value.

For example, as shown in FIG. 3, the pressure relief mechanism 25 is located between the positive electrode terminal 23 and the negative electrode terminal 24. The pressure relief mechanism 25 may be a component such as an explosion-proof valve, a rupture disc, a gas valve, a pressure relief valve, or a safety valve.

Understandably, the shell 21 is not limited to the above structure. The shell 21 may alternatively be of other structures. For example, the shell 21 includes a shell body 211 and two end covers 212, the shell body 211 is of a hollow structure with openings 2111 on two opposite sides, and one end cover 212 corresponds to one opening 2111 of the shell body 211 and forms a sealed connection to form a sealed space for accommodating the electrode assembly 22 and the electrolyte. In this structure, the positive electrode terminal 23 and the negative electrode terminal 24 may be mounted on the same end cover 212 or on different end covers 212. The pressure relief mechanism 25 may be mounted on one end cover 212, or the pressure relief mechanisms 25 may be mounted on two end covers 212.

In this embodiment of the present application, one or more electrode assemblies 22 may be accommodated in the shell 21. For example, in FIG. 3, there are two electrode assemblies 22, and the two electrode assemblies 22 are stacked.

It should be noted that the electrode assembly 22 is a component that undergoes electrochemical reactions in the battery cell 20. Refer to FIG. 4. FIG. 4 is a cross-sectional view of the electrode assembly 22 provided in some embodiments of the present application. The electrode assembly 22 may include a negative electrode sheet 221, a separator 222, and a positive electrode sheet 223. The electrode assembly 22 may be of a wound structure formed by winding the negative electrode sheet 221, the separator 222, and the positive electrode sheet 223, or a laminated structure formed by laminating the negative electrode sheet 221, the separator 222, and the positive electrode sheet 223. For example, in FIG. 4, the electrode assembly 22 is of a wound structure formed by winding the negative electrode sheet 221, the separator 222, and the positive electrode sheet 223.

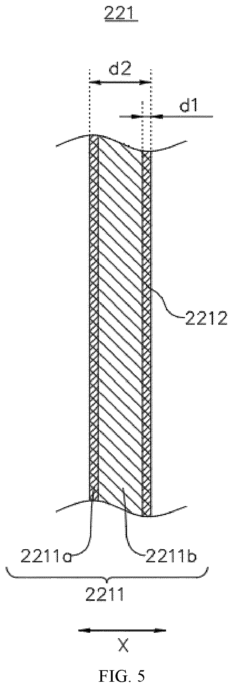

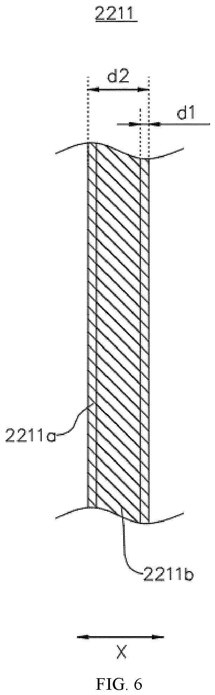

According to some embodiments of the present application, refer to FIGs. 3 and 4 and further refer to FIGs. 5 and 6, where FIG. 5 is a partial cross-sectional view of a negative electrode sheet 221 provided in some embodiments of the present application, and FIG. 6 is a partial cross-sectional view of a porous matrix 2211 of the negative electrode sheet 221 provided in some embodiments of the present application. The present application provides a negative electrode sheet 221. The negative electrode sheet 221 includes a porous matrix 2211 and a first insulator 2212. The porous matrix 2211 has a first surface area 2211a in its thickness direction. The first insulator 2212 clads at least a partial metal surface of the first surface area 2211a.

The porous matrix 2211 has a plurality of pores, and may be made of a foam metal, or may be of a mesh structure woven with metal wires.

The first insulator 2212 clads at least a partial metal surface of the first surface area 221 1a, that is, the first insulator 2212 may clad a metal surface of a partial area of the first surface area 2211a or a partial surface of metal in the first surface area 2211a. Of course, the first insulator 2212 may alternatively clad the entire metal surface of the first surface area 2211a.

For example, a material of the first insulator 2212 may be various, such as aluminum oxide, zirconium oxide, fluoroethylene, or polymethyl methacrylate.

As shown in FIG. 5 and FIG. 6, the porous matrix 2211 further includes a current collecting area 2211b, the current collecting area 2211b and the first surface area 2211a are arranged in the thickness direction X of the porous matrix, and the current collecting area 2211b is used for providing a reaction site for lithium ions, that is, lithium ions can obtain electrons in the current collecting area 2211b. In some embodiments, in the thickness direction X of the porous matrix, the first surface area 2211a may be disposed on one side or two sides of the porous matrix 2211. In a structure with first surface areas 2211a disposed on two sides of the porous matrix 2211, the two first surface areas 2211a are located on the two sides of the current collecting area 2211b separately in the thickness direction X of the porous matrix.

It should be noted that the thickness direction X of the porous matrix is a superposition direction of the negative electrode sheet 221 and the positive electrode sheet 223.

The first insulator 2212 is disposed in the first surface area 2211a of the porous matrix 2211, and the first insulator 2212 can clad at least the partial metal surface of the first surface area 2211a, thereby insulating at least the partial metal surface of the first surface area 2211a. The negative electrode sheet 221 with this structure makes it difficult for lithium ions to obtain electrons on the surface of the porous matrix 2211 during use, which can effectively alleviate precipitation of lithium metal and formation of dendritic crystals on the surface of the negative electrode sheet 221. This can effectively reduce surface expansive deformation of the negative electrode sheet 221 during lithium precipitation, can alleviate damage to the separator 222 by the dendritic crystals formed by deposition of the lithium metal on the surface of the negative electrode sheet 221, and is conducive to reducing safety hazards such as short-circuiting in a battery cell 20 with this negative electrode sheet 221 during use to improve the use safety of the battery cell 20.

According to some embodiments of the present application, the first insulator 2212 clads all the metal surface of the first surface area 2211a. That is, all the metal surface of the first surface area 2211a is clad with the first insulator 2212.

All the metal surface of the first surface area 2211a is clad with the first insulator 2212, which is beneficial to further reducing the lithium precipitation and the formation of dendritic crystals on the surface of the negative electrode sheet 221 during use, thereby better reducing the safety hazards of short-circuiting caused by the expansive deformation of the battery cell 20 with this negative electrode sheet 221 or the puncture of the separator 222.

According to some embodiments of the present application, as shown in FIGs. 5 and 6, in the thickness direction X of the porous matrix, the porous matrix 2211 has the first surface area 2211a on two sides.

The metal in the two first surface areas 2211a is clad with the first insulator 2212, and the two first surface areas 2211a are located on two sides of the current collecting area 2211b separately in the thickness direction X of the porous matrix.

The first surface areas 2211a are disposed on the two sides of the porous matrix in the thickness direction X to reduce the risks of lithium precipitation and formation of dendritic crystals on two sides of the negative electrode sheet 221, so that lithium metal precipitates and deposits inside the porous matrix 2211, which is conducive to further improving the safety of use of the battery cell 20 with this negative electrode sheet 221.

According to some embodiments of the present application, as shown in FIGs. 5 and 6, the two first surface areas 2211a have an equal thickness in the thickness direction X of the porous matrix.

The first surface areas 2211a on the two sides of the porous matrix 2211 have the same thickness, so that this negative electrode sheet 221 can be applied to a structure with positive electrode sheets 223 on the two sides of the negative electrode sheet 221, which can expand the application scope of the negative electrode sheet 221.

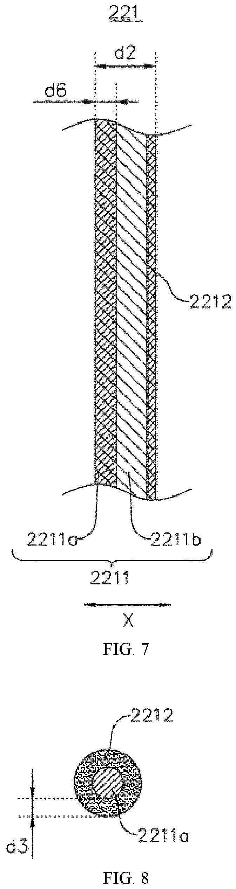

In some embodiments, refer to FIG. 7, where FIG. 7 is a partial cross-sectional view of a negative electrode sheet 221 provided in other embodiments of the present application. In the thickness direction X of the porous matrix, the thickness of one first surface area 2211a in the two first surface areas 2211a is greater than that of the other first surface area 221 1a.

For example, in a stacked or wound electrode assembly 22, the negative electrode sheet 221 on the outermost side of the electrode assembly 22 may be configured in such a way that the thickness of the first surface area 2211a away from the positive electrode sheet 223 is greater than that of the first surface area 2211a facing the positive electrode sheet 223.

The thickness of the first surface area 2211a on one side of the negative electrode sheet 221 is greater than that of the first surface area 2211a on the other side, so that the negative electrode sheet 221 can be applied to a structure with a positive electrode sheet 223 on one side of the negative electrode sheet 221, which can expand the application scope of the negative electrode sheet 221.

According to some embodiments of the present application, as shown in FIGs. 5 and 6, in the thickness direction X of the porous matrix, the thickness of one first surface area 2211a is d1, and a thickness of the porous matrix 2211 is d2, satisfying 0.01 ≤ d1/d2 ≤ 0.1, and preferably 0.02 ≤ d1/d2≤ 0.05.

A ratio of the thickness of the first surface area 221 1a to the thickness of the porous matrix 2211 is 1% to 10%, that is, the area coated with the first insulator 2212 in the thickness direction X of the porous matrix accounts for 1% to 10% of the overall thickness of the porous matrix 2211. It should be noted that d1 represents the thickness of the first surface area 2211a on one side of the porous matrix 2211.

For example, a negative electrode sheet 221 of a porous matrix 2211 having a thickness of 100 µm and a separator 222 having a thickness of 20 µm are selected for an experiment. The separator 222 having the thickness of 20 µm is selected to ensure that the electrode assembly 22 is not short-circuited at the beginning. To accelerate the experiment, the separator 222 is pricked. During cyclic charging and discharging experiments, once lithium metal precipitates on the surface of the negative electrode sheet 221 and dendritic crystals are deposited, the dendritic crystals quickly pass through holes of the separator 222, resulting in a contact short circuit between the negative electrode sheet 221 and the positive electrode sheet 223. 7 groups of experimental subjects with different thicknesses in the first surface area 2211a were used for experiments. Experimental results are as follows:

| Group | Thickness of first surface area/ µm | Thickness ratio of first surface area/ % | Number of short-circuit cycles of electrode assembly |
|---|---|---|---|
| 1 | 0 | 0% | 3 |
| 2 | 1 | 1% | 22 |
| 3 | 2 | 2% | 27 |
| 4 | 3 | 3% | 30 |
| 5 | 5 | 5% | 31 |
| 6 | 8 | 8% | 33 |
| 7 | 10 | 10% | 33 |

From the above experimental data, it can be seen that when the thickness of the first surface area 2211a reaches 1%, the deposition of lithium metal on the surface can already be effectively prevented; the best effect is between 2% and 5%; and the effect is not greatly improved between 8% and 10%.

It should be noted that the accelerated experiment used here is not the actual number of cycles of the battery cell 20.

The negative electrode sheet 221 with this structure can reduce the risk of still easy extension of deposited lithium metal dendritic crystals out of the porous matrix 2211 due to the small thickness of the first surface area 2211a, to reduce short-circuiting caused by the puncture of the separator 222, and can alleviate the phenomenon of a small area for lithium ion reaction in the porous matrix 2211 due to the large thickness of the first surface area 2211a, to reduce the risk of excessive current density in the porous matrix 2211. In addition, the ratio of the thickness of the first surface area 2211a to the thickness of the porous matrix 2211 is further set to 2% to 5%, so that an optimal effect is achieved in solving the problem of short-circuiting caused by the puncture of the separator 222, and unnecessary waste and occupation of too much space of the porous matrix 2211 can be reduced.

According to some embodiments of the present application, with continued reference to FIGs. 5 and 6, in the thickness direction X of the porous matrix, the thickness of the first surface area 2211a is d1, satisfying d1 ≥ 1 µm.

The thickness of the first surface area 2211a is greater than or equal to 1 µm, that is, the thickness of the area coated with the first insulator 2212 in the thickness direction X of the porous matrix is greater than or equal to 1 µm.

The negative electrode sheet 221 with this structure can well prevent lithium precipitation on the surface of the negative electrode sheet 221, thereby effectively reducing the risk of puncture of the separator 222 by dendritic crystals from the deposition of lithium metal.

According to some embodiments of the present application, refer to FIG. 8, where FIG. 8 is a schematic diagram illustrating that the first insulator 2212 clads the metal surface of the first surface area 2211a provided in some embodiments of the present application. The first insulator 2212 clads the metal surface of the first surface area 2211a by a thickness of d3, satisfying 10 nm ≤ d3 ≤ 100 nm, and preferably 30 nm ≤ d3 ≤ 50 nm.

For example, in the experimental process, the thickness by which the first insulator 2212 clads the metal surface of the first surface area 2211a mainly affects insulating performance. However, excessive thickness may lead to the loss of toughness of the first insulator 2212, causing risks of powder shedding and detachment of the first insulator 2212. 8 groups of experimental subjects with different thicknesses by which the first insulator 2212 clads the metal surface of the first surface area 2211a were used for experiments. Experimental results are as follows:

| Group | Thickness of cladding with first insulator/ nm | Resistivity Ω·cm after the first surface area is clad with the first insulator | Powder shedding of first insulator |
|---|---|---|---|
| 1 | 0 | 4.08*10⁻⁴ | / |
| 2 | 5 | 0.735 | No powder shedding |
| 3 | 10 | 131.5 | No powder shedding |
| 4 | 30 | 399.7 | No powder shedding |
| 5 | 50 | 964.7 | Mild powder shedding |
| 6 | 70 | 981.1 | Powder shedding |
| 7 | 100 | 983.5 | Powder shedding |
| 8 | 200 | 1013.2 | Much powder shedding |

From the above experimental data, it can be seen that when the thickness by which the first insulator 2212 clads the metal surface of the first surface area 2211a is less than 10 nm, the resistivity after the first surface area 2211a is clad with the first insulator 2212 is lower and the insulating performance is poor. After the thickness by which the first insulator 2212 clads the metal surface of the first surface area 2211a reaches 10 nm, a good insulating effect can be achieved. After reaching 200 nm, much powder sheds from the first insulator 2212. Therefore, the thickness by which the first insulator 2212 clads the metal surface of the first surface area 2211a is set to 10 nm to 100 nm, which can reduce poor insulating effect caused by the too small thickness of the first insulator 2212. On the other hand, waste of the first insulator 2212 caused by the too large thickness of the first insulator 2212 can be reduced to reduce the production cost of the negative electrode sheet 221. Meanwhile, the impact of powder shedding on the wetting performance of an electrolytic solution can be reduced to reduce the impact on the electrochemical performance of the battery.

When the thickness by which the first insulator 2212 clads the metal surface of the first surface area 2211a is greater than or equal to 30 nm, the resistivity after the first surface area 2211a is clad with the first insulator 2212 is significantly increased. After the thickness by which the first insulator 2212 clads the metal surface of the first surface area 2211a is greater than or equal to 70 nm, the resistivity will not be significantly increased, and powder shedding occurs. Therefore, the thickness by which the first insulator 2212 clads the metal surface of the first surface area 2211a is preferably 30 nm to 50 nm, which can ensure insulating performance and alleviate the risk of powder shedding.

According to some embodiments of the present application, the first surface area 2211a has a plurality of pores, and a porosity of the first surface area 2211a is P, satisfying 20% ≤ P ≤ 95%, and preferably 60% ≤ P ≤ 95%.

A porosity of the current collecting area 2211b of the porous matrix 2211 is also 20% to 95%, and preferably 60% to 95%.

The porosity of the first surface area 2211a is 20% to 95%, which can reduce poor passing of lithium ions due to too small porosity, and can reduce the risk of poor structural strength of the porous matrix 2211 due to too large porosity. In addition, the porosity of the first surface area 2211a is further 60% to 95% to ensure that lithium ions have good passing ability, so that the lithium ions can enter the interior of the porous matrix 2211 for reaction.

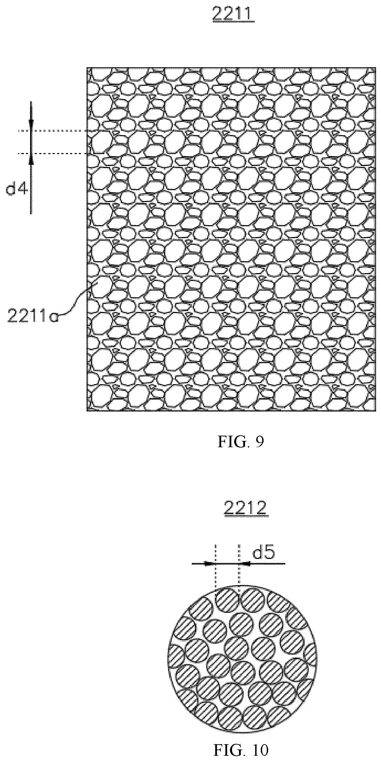

According to some embodiments of the present application, refer to FIG. 9, where FIG. 9 is a top view of the porous matrix 2211 provided in some embodiments of the present application. A pore size of the first surface area 2211a is d4, satisfying 50 µm ≤ d4 ≤ 300 µm.

A wire diameter of the metal of the porous matrix 2211 is 10 µm to 50 µm. A pore diameter of the current collecting area 2211b of the porous matrix 2211 is also 50 µm to 300 µm.

The pore size of the first surface area 2211a is 50 µm to 300 µm, which can effectively reduce blockage of the pores by the first insulator 2212 due to too small pore size to ensure that the lithium ions can enter the interior of the porous matrix 2211 through the first surface area 2211a, and can reduce the risk of poor structural strength of the porous matrix 2211 due to too large pore size.

According to some embodiments of the present application, a material of the porous matrix 2211 is foam metal. By using the porous matrix 2211 of the foam metal, the porous matrix 2211 reacts directly with the lithium ions, so as to input or output electric energy of the negative electrode sheet 221. The porous matrix 2211 of this structure can achieve lithium precipitation and deposition of lithium ions inside the porous matrix 2211, which is conducive to reducing the risk of lithium precipitation on the surface of the negative electrode sheet 221.

In some embodiments, the material of the porous matrix 2211 is foam copper.

It should be noted that the material of the porous matrix 2211 may alternatively be foam nickel or the like in other embodiments.

The foam copper is used as the material of the porous matrix 2211, so that the porous matrix 2211 has good conductivity, which is conducive to reducing internal resistance of the battery cell 20 with the negative electrode sheet 221 to improve the performance of the battery cell 20.

According to some embodiments of the present application, refer to FIG. 10, where FIG. 10 is a partial cross-sectional view of the first insulator 2212 provided in some embodiments of the present application. A particle size of the first insulator 2212 is d5, satisfying d5 ≤ 60 nm.

The particle size of the first insulator 2212 is less than or equal to 60 nm, which facilitates cladding of the first insulator 2212 on the metal of the first surface area 2211a in the production process to reduce the risk of detachment of the first insulator 2212, and can alleviate blockage of the pores of the porous matrix 2211 by the first insulator 2212 due to the excessive particle size of the first insulator 2212.

In some embodiments, a material of the first insulator 2212 is aluminum oxide or zirconium oxide. Of course, the first insulator 2212 may alternatively be of other materials, such as fluoroethylene or polymethyl methacrylate.

The first insulator 2212 made of aluminum oxide or zirconium oxide may have good insulating performance and lower cost, which is beneficial to reducing the production cost of the negative electrode sheet 221.

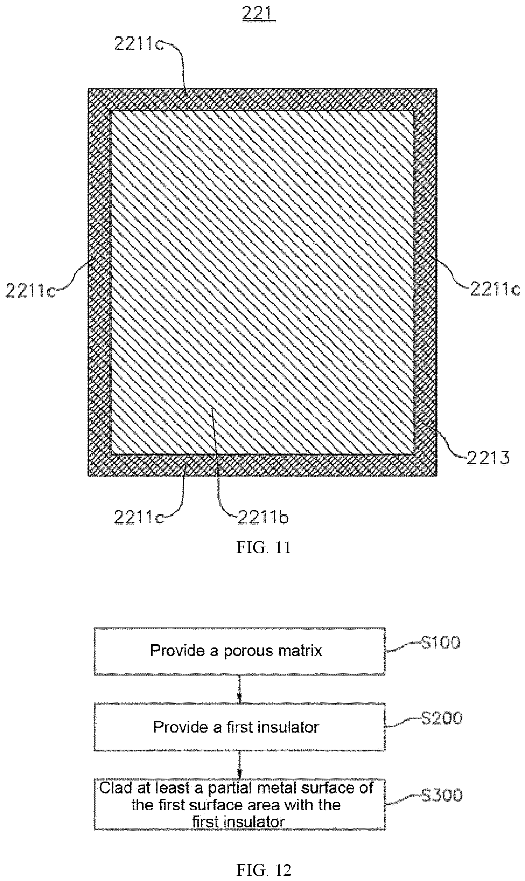

According to some embodiments of the present application, refer to FIG. 11, where FIG. 11 is a cross-sectional view of the negative electrode sheet 221 in a direction perpendicular to the thickness direction X of the porous matrix provided in some embodiments of the present application. In the direction perpendicular to the thickness direction X of the porous matrix, the porous matrix 2211 has second surface areas 2211c on two sides. The negative electrode sheet 221 further includes a second insulator 2213, and the second insulator 2213 clads metal surfaces of the second surface areas 2211c.

In the direction perpendicular to the thickness direction X of the porous matrix, the porous matrix 2211 has the second surface areas 221 1c on the sides, that is, the second surface areas 2211c are also disposed on the two sides of the porous matrix 2211 in the length or width direction. For example, in FIG. 11, the second surface areas 2211c are disposed on the two sides of the porous matrix 2211 in its length and width directions.

In the direction perpendicular to the thickness direction X of the porous matrix, the second surface areas 2211c are disposed on the sides of the porous matrix 2211, and the second insulator 2213 clads the metal of the second surface areas 2211c. This can effectively alleviate lithium precipitation on the two sides of the porous matrix 2211 in the direction perpendicular to the thickness direction X of the porous matrix, can further reduce the risk of puncture of the separator 222 by dendritic crystals from the deposition of lithium metal, and is beneficial to improving the safety of use of the battery cell 20 with this negative electrode sheet 221.

According to some embodiments of the present application, the present application further provides an electrode assembly 22, including a positive electrode sheet 223 and the negative electrode sheet 221 in any of the above solutions. The negative electrode sheet 221 and the positive electrode sheet 223 are wound or laminated.

For example, in FIG. 4, the positive electrode sheet 223 and the negative electrode sheet 221 of the electrode assembly 22 are wound.

According to some embodiments of the present application, in the thickness direction X of the porous matrix, the metal surface of the first surface area 2211a, opposite to the positive electrode sheet 223, of the negative electrode sheet 221 is clad with the first insulator 2212. That is, the first insulator 2212 is disposed on the metal surface of the first surface area 2211a opposite to the positive electrode sheet 223.

The first surface area 2211a, opposite to the positive electrode sheet 223, of the negative electrode sheet 221, namely, the first surface area 2211a, facing one side of the positive electrode sheet 223, of the negative electrode sheet 221, overlaps with a projection of the positive electrode sheet 223 in the thickness direction X of the porous matrix.

The first insulator 2212 is disposed on the metal surface of the first surface area 2211a, opposite to the positive electrode sheet 223, of the negative electrode sheet 221 to ensure that the first insulator 2212 is disposed in an area with a high reaction density between the first surface area 2211a of the negative electrode sheet 221 and the positive electrode sheet 223, so as to effectively alleviate puncture of the separator 222 by dendritic crystals from the deposition of lithium metal due to lithium precipitation on the surface of the negative electrode sheet 221, to reduce safety hazards of the electrode assembly 22 during use.

According to some embodiments of the present application, as shown in FIGs. 4 and 7, the porous matrix 2211 has the first surface areas 2211a on two sides in the thickness direction X of the porous matrix, and in the two first surface areas 2211a of the outermost negative electrode sheet 221 of the electrode assembly 22, the thickness of the first surface area 2211a facing the positive electrode sheet 223 is less than that of the first surface area 2211a away from the positive electrode sheet 223.

In the two first surface areas 2211a of the outermost negative electrode sheet 221 of the electrode assembly 22, the thickness of the first surface area 2211a facing the positive electrode sheet 223 is less than that of the first surface area 2211a away from the positive electrode sheet 223, that is, the first surface area 2211a of the negative electrode sheet 221 is thicker on the side where the positive electrode sheet 223 is not disposed.

It should be noted that, in the electrode assembly 22 of the laminated structure, in the two first surface areas 2211a of the outermost negative electrode sheet 221 of the electrode assembly 22, the thickness of the first surface area 2211a facing the positive electrode sheet 223 is less than that of the first surface area 2211a away from the positive electrode sheet 223; and in the electrode assembly 22 of the wound structure, in the first surface areas 2211a of the innermost negative electrode sheet 221 of the electrode assembly 22, the thickness of the first surface area 2211a facing the positive electrode sheet 223 is also less than that of the first surface area 2211a away from the positive electrode sheet 223.

The electrode assembly 22 with this structure can reduce the area used for lithium ion reaction in the outermost negative electrode sheet 221, thereby shortening a migration path of lithium ions and improving the performance of the electrode assembly 22.

According to some embodiments of the present application, with continued reference to FIGs. 4 and 7, in the thickness direction X of the porous matrix, the thickness of the first surface area 2211a on the outermost side of the electrode assembly 22 is d6, and the thickness of the porous matrix 2211 is d2, satisfying 0.45 ≤ d6/d2 ≤ 0.55.

A ratio of the thickness of the first surface area 2211a, away from the positive electrode sheet 223, of the negative electrode sheet 221 to the thickness of the porous matrix 2211 is 45% to 55%. That is, in the thickness direction X of the porous matrix, the area coated with the first insulator 2212 on the side, away from the positive electrode sheet 223, of the negative electrode sheet 221 accounts for 45% to 55% of the porous matrix 2211.

The ratio of the thickness of the first surface area 2211a, away from the positive electrode sheet 223, of the negative electrode sheet 221 to the thickness of the porous matrix 2211 is 45% to 55%, which can reduce an excessive lithium ion migration path caused by the too small thickness of the first surface area 2211a away from the positive electrode sheet 223, and can overcome a too small area for lithium ion reaction in the porous matrix 2211 due to the too large thickness of the first surface area 2211a away from the positive electrode sheet 223, to reduce the risk of excessive current density of the porous matrix 2211.

According to some embodiments of the present application, an embodiment of the present application further provides a battery cell 20, including a shell 21 and the electrode assembly 22 in any of the above solutions, where the electrode assembly 22 is accommodated in the shell 21.

According to some embodiments of the present application, an embodiment of the present application further provides a battery 100. The battery 100 includes a box 10 and the battery cell 20 in any of the above solutions, and the battery cell 20 is accommodated in the box 10.

According to some embodiments of the present application, an embodiment of the present application further provides an electrical device, including the battery cell 20 in any of the above solutions, where the battery cell 20 is used for providing electrical energy to the electrical device.

The electrical device may be any of the foregoing devices or systems using the battery cell 20.

According to some embodiments of the present application, as shown in FIGs. 4 to 6, the present application provides a negative electrode sheet 221. The negative electrode sheet 221 includes a porous matrix 2211 and a first insulator 2212. The porous matrix 2211 has a current collecting area 2211b and two first surface areas 2211a, and the two first surface areas 2211a are located on two sides of the current collecting area 2211b in a thickness direction X of the porous matrix. The first insulator 2212 clads a metal surface of the first surface area 2211a. In the thickness direction X of the porous matrix, a thickness of the first surface area 2211a is d1, and a thickness of the porous matrix 2211 is d2, satisfying 0.02 ≤ d1:d2 ≤ 0.05. The first insulator 2212 clads the metal surface of the first surface area 2211a by a thickness of d3, satisfying 30 nm ≤ d3 ≤ 50 nm. The porous matrix 2211 is made of a foam metal.

An embodiment of the present application further provides a manufacturing method for a negative electrode sheet 221, as shown in FIG. 12. FIG. 12 is a schematic flowchart of a manufacturing method for a negative electrode sheet 221 provided in some embodiments of the present application. The manufacturing method includes:
S100: Provide a porous matrix 2211, where the porous matrix 2211 has a first surface area 2211a in its thickness direction;
S200: Provide a first insulator 2212; and
S300: Clad at least a partial metal surface of the first surface area 2211a with the first insulator 2212.

It should be noted that the relevant structure of the negative electrode sheet 221 manufactured by the manufacturing method provided in the foregoing embodiment may be referenced to the negative electrode sheet 221 provided in the foregoing embodiments, and will not be repeated here.

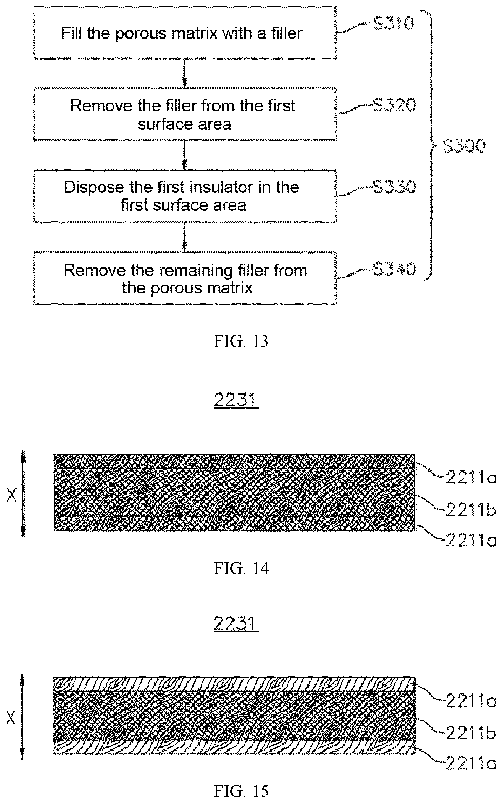

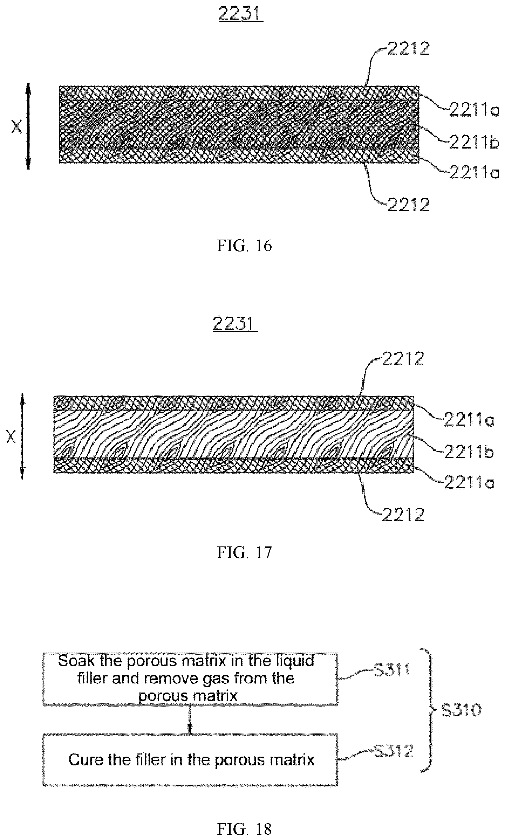

According to some embodiments of the present application, refer to FIG. 12 and further refer to FIG. 13, where FIG. 13 is a schematic flowchart of step S300 of the manufacturing method for a negative electrode sheet 221 provided in some embodiments of the present application. Step S300: Clad at least a partial metal surface of the first surface area 2211a with the first insulator 2212, including:
S310: Fill the porous matrix 2211 with a filler (as shown in FIG. 14, which is a partial cross-sectional view of the porous matrix 2211 provided in some embodiments of the present application after step S310, namely, the porous matrix 2211 after both the first surface area 2211a and a current collecting area 2211b are filled with the filler);
S320: Remove the filler from the first surface area 2211a (as shown in FIG. 15, which is a partial cross-sectional view of the porous matrix 2211 provided in some embodiments of the present application after step S320, namely, the porous matrix 2211 after the filler is removed from the first surface area 2211a);
S330: Dispose the first insulator 2212 in the first surface area 2211a, so that at least the partial metal surface of the first surface area 2211a is clad with the first insulator 2212 (as shown in FIG. 16, which is a partial cross-sectional view of the porous matrix 2211 provided in some embodiments of the present application after step S330, namely, the porous matrix 2211 after the first insulator 2212 is disposed in the first surface area 2211a); and
S340: Remove the remaining filler from the porous matrix 2211 (as shown in FIG. 17, which is a partial cross-sectional view of the porous matrix 2211 provided in some embodiments of the present application after step S340, namely, the porous matrix 2211 after the filler is removed from the current collecting area 2211b).

In step S320 of removing the filler from the first surface area 2211a, the filler may be removed from the first surface area 2211a with a brush or other tools to expose the metal in the first surface area 2211a. In S340 of removing the remaining filler from the porous matrix 2211, the filler is removed from the current collecting area 2211b of the porous matrix 2211.

For example, after the filler is removed from the first surface area 2211a, the first insulator 2212 cladding the metal surface of the first surface area 2211a may be various, such as aluminum oxide or zirconium oxide cladding the metal surface of the first surface area 2211a in a physical coating manner such as evaporation, magnetron sputtering, or ion beam sputtering. For example, when the metal in the first surface area 2211a is clad with the first insulator 2212 in a magnetron sputtering manner, a degree of vacuum is 0.4 Pa, working gases include O2 and Ar, a target is Al, the porous matrix 2211 is disposed on a cooling table to prevent the filler from melting at high temperatures, the sputtering time is 1 h, and the first insulator 2212 can clad the metal in the first surface area 2211a. Of course, in other embodiments, the first insulator 2212 may alternatively be other polymer materials, such as fluoroethylene or polymethyl methacrylate.

It should be noted that the material of the first insulator 2212 is an insulating and non-lithiophilic material, that is, the first insulator 2212 cannot undergo chemical and electrochemical reactions with lithium metal.

By using this manufacturing method, the metal of the first surface area 2211a is clad with the first insulator 2212, which can effectively reduce permeation of the first insulator 2212 into the interior of the porous matrix 2211 in the production process, which is conducive to controlling the thickness of the first surface area 2211a. That is, this manufacturing method can accurately control the thickness of the area coated with the first insulator 2212 in the thickness direction X of the porous matrix, and can effectively improve the quality of cladding of the first insulator 2212 on the metal in the first surface area 2211a, so as to improve the production quality of the negative electrode sheet 221.

According to some embodiments of the present application, refer to FIG. 13 and further refer to FIG. 18, where FIG. 18 is a schematic flowchart of step S310 of the manufacturing method for a negative electrode sheet 221 provided in some embodiments of the present application. Step S310: Fill the porous matrix 2211 with a filler, including:
S311: Soak the porous matrix 2211 in the liquid filler and remove gas from the porous matrix 2211; and
S312: Cure the filler inside the porous matrix 2211.

In step S311 of soaking the porous matrix 2211 in the liquid filler and removing gas from the porous matrix 2211, the gas may be removed by vacuum extraction from the interior of the porous matrix 2211 soaked in the filler.

It should be noted that, if the filler is solid, the filler is required to be transformed into liquid before step S311 to facilitate soaking of the porous matrix 2211.

In some embodiments, the filler is a phase change material or a soluble polymer material. The use of a phase change material or a soluble polymer material as the filler facilitates the transformation of the filler into liquid or solid during the production of the negative electrode sheet 221, thereby reducing machining difficulties of the negative electrode sheet 221.

For example, the filler may be a phase change material such as paraffin. The paraffin is first heated to 40-70 degrees Celsius for melting, then the porous matrix 2211 is soaked in the melted paraffin liquid, and gas inside the porous matrix 2211 is extracted. After the porous matrix 2211 is soaked, the paraffin is cooled to room temperature to achieve curing of the paraffin.

It should be noted that, in other embodiments, the filler may alternatively be a polymer material such as fluoroethylene or polymethyl methacrylate. When such a filler is used, the filler may be removed from the current collecting area 2211b of the porous matrix 2211 by solvent dissolution or heating. Of course, when both the filler and the first insulator 2212 are polymer materials such as fluoroethylene or polymethyl methacrylate, the polymer material such as fluoroethylene or polymethyl methacrylate with higher concentration may be used as the filler to fill in the porous matrix 2211, while the polymer material such as fluoroethylene or polymethyl methacrylate with lower concentration is correspondingly used as the first insulator 2212 to clad the metal surface of the first surface area 2211a. In this case, the filler cannot be removed by solvent dissolution from the current collecting area 2211b of the porous matrix 2211, but can be removed by heat melting. That is, when both the first insulator 2212 and the filler are polymer materials such as fluoroethylene or polymethyl methacrylate, the melting point of the polymer material used as the first insulator 2212 should be higher than that of the polymer material used as the filler, so as to control the temperature to be lower than the melting point of the polymer material used as the first insulator 2212 and higher than the melting point of the polymer material used as the filler during heating, to remove the filler.

In the foregoing manufacturing method, the filler is first transformed into liquid, then the porous matrix 2211 is soaked in the filler, and finally the filler is cured to fill in the porous matrix 2211. Therefore, the method is simple, easy to operate, and beneficial to reducing manufacturing difficulties. Moreover, the gas inside the porous matrix 2211 is removed while the porous matrix 2211 is soaked in the liquid filler, so that the filler can be densely filled in the porous matrix 2211 to reduce poor filling of the filler and ensure subsequent machining quality of the negative electrode sheet 221.

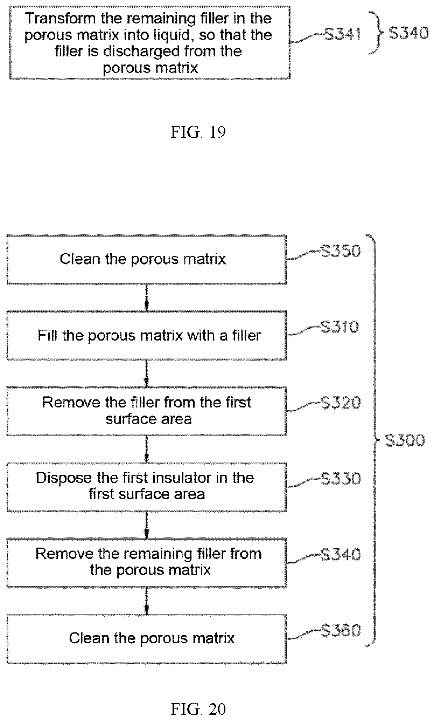

According to some embodiments of the present application, refer to FIG. 13 and further refer to FIG. 19, where FIG. 19 is a schematic flowchart of step S340 of the manufacturing method for a negative electrode sheet 221 provided in some embodiments of the present application. Step S340: Remove the remaining filler from the porous matrix 2211, including:
S341: Transform the remaining filler in the porous matrix 2211 into liquid, so that the filler is discharged from the porous matrix 2211.

When paraffin is used as the filler, the paraffin may be heated to 80-100 degrees Celsius (to reduce insufficient melting of the paraffin at too low temperatures, and to reduce damage to the porous matrix 2211 or the first insulator 2212 at too high temperatures), so that the paraffin is melted and flows out of the current collecting area 2211b of the porous matrix 2211. When a polymer material such as fluoroethylene or polymethyl methacrylate is used as the filler, a solvent may be used to dissolve the polymer material into liquid, so that the filler flows out from the current collecting area 2211b of the porous matrix 2211.

In the foregoing manufacturing method, the remaining filler in the porous matrix 2211 is first transformed into liquid and then discharged from the porous matrix 2211. This manufacturing method facilitates the removal of the filler from the porous matrix 2211, reduces machining difficulties, and can effectively reduce remaining of the filler in the porous matrix 2211, which is conducive to improving the production quality of the negative electrode sheet 221.

According to some embodiments of the present application, refer to FIG. 20, where FIG. 20 is a schematic flowchart of step S300 of the manufacturing method for a negative electrode sheet 221 provided in other embodiments of the present application. Before filling the porous matrix 2211 with a filler in step S310, the manufacturing method for a negative electrode sheet 221 further includes:
S350: Clean the porous matrix 2211; and/or

After removing the remaining filler from the porous matrix 2211 in step S340, the manufacturing method for a negative electrode sheet 221 further includes:
S360: Clean the porous matrix 2211.

For example, a solution used for cleaning the porous matrix 2211 in steps 350 and 360 may be water, xylene, or the like.

In the foregoing manufacturing method, the porous matrix 2211 is cleaned before the filler is filled in the porous matrix 2211, which is beneficial to reducing burrs or impurities inside the porous matrix 2211, thereby effectively improving subsequent machining quality of the porous matrix 2211. Moreover, the porous matrix 2211 with the first insulator 2212 is cleaned after the remaining filler is removed from the porous matrix 2211, which is beneficial to reducing the residual filler on the negative electrode sheet 221, thereby effectively improving the production quality of the negative electrode sheet 221.

It should be noted that the embodiments in the present application and the features of the embodiments may be combined with each other on a non-conflict basis.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. A negative electrode sheet, comprising:
a porous matrix, having a first surface area in its thickness direction; and
a first insulator, cladding at least a partial metal surface of the first surface area.

2. The negative electrode sheet according to claim 1, wherein the first insulator clads all the metal surface of the first surface area.

3. The negative electrode sheet according to claim 1 or 2, wherein in the thickness direction of the porous matrix, the porous matrix has the first surface areas on both sides.

4. The negative electrode sheet according to any one of claims 1-3, wherein the two first surface areas have an equal thickness in the thickness direction of the porous matrix.

5. The negative electrode sheet according to any one of claims 1-3, wherein in the thickness direction of the porous matrix, the thickness of one of the two first surface areas is greater than that of the other first surface area.

6. The negative electrode sheet according to any one of claims 1-5, wherein in the thickness direction of the porous matrix, the thickness of one of the first surface areas is d₁, and a thickness of the porous matrix is d₂, satisfying 0.01 ≤ d₁/d₂ ≤ 0.1, and preferably, 0.02 ≤ d₁/d₂ ≤ 0.05.

7. The negative electrode sheet according to any one of claims 1-6, wherein in the thickness direction of the porous matrix, the thickness of the first surface area is d₁, satisfying d₁ ≥ 1 µm.

8. The negative electrode sheet according to any one of claims 1-7, wherein the first insulator clads the metal surface of the first surface area by a thickness of d₃, satisfying 10 nm ≤ d₃ ≤ 100 nm, and preferably, 30 nm ≤ d₃ ≤ 50 nm.

9. The negative electrode sheet according to any one of claims 1-8, wherein the first surface area has a plurality of pores, and a porosity of the first surface area is P, satisfying 20% ≤ P ≤ 95%, and preferably, 60% ≤ P ≤ 95%.

10. The negative electrode sheet according to claim 9, wherein a pore size of the pores is d₄, satisfying 50 µm ≤ d₄ ≤ 300 µm.

11. The negative electrode sheet according to any one of claims 1-10, wherein a material of the porous matrix is foam metal.

12. The negative electrode sheet according to claim 11, wherein the material of the porous matrix is foam copper.

13. The negative electrode sheet according to any one of claims 1-12, wherein a particle size of the first insulator is d₅, satisfying d₅ ≤ 60 nm.

14. The negative electrode sheet according to any one of claims 1-13, wherein a material of the first insulator is aluminum oxide or zirconium oxide.

15. The negative electrode sheet according to any one of claims 1-14, wherein in a direction perpendicular to the thickness direction of the porous matrix, the porous matrix has second surface areas on both sides; and
the negative electrode sheet further comprises a second insulator, and the second insulator clads metal surfaces of the second surface areas.

16. An electrode assembly, comprising:
a positive electrode sheet; and
the negative electrode sheet according to any one of claims 1-15, wherein the negative electrode sheet and the positive electrode sheet are wound or laminated.

17. The electrode assembly according to claim 16, wherein the metal surface of the first surface area, opposite to the positive electrode sheet, of the negative electrode sheet is clad with the first insulator.

18. The electrode assembly according to claim 16 or 17, wherein the porous matrix has the first surface areas on both sides in the thickness direction of the porous matrix, in the two first surface areas of the outermost negative electrode sheet of the electrode assembly, and the thickness of the first surface area facing the positive electrode sheet is less than that of the first surface area away from the positive electrode sheet.

19. The electrode assembly according to claim 18, wherein in the thickness direction of the porous matrix, the thickness of the first surface area on the outermost side of the electrode assembly is d₆, and the thickness of the porous matrix is d₂, satisfying 0.45 ≤ d₆/d₂ ≤ 0.55.

20. A battery cell, comprising:
a shell; and
the electrode assembly according to any one of claims 16-19, wherein the electrode assembly is accommodated in the shell.

21. A battery, comprising:
a box; and
the battery cell according to claim 20, wherein the battery cell is accommodated in the box.

22. An electrical device, comprising the battery cell according to claim 20.

23. A manufacturing method for a negative electrode sheet, comprising steps of:
providing a porous matrix, wherein the porous matrix has a first surface area in its thickness direction;
providing a first insulator; and
cladding at least a partial metal surface of the first surface area with the first insulator.

24. The manufacturing method for a negative electrode sheet according to claim 23, wherein the step of cladding at least a part of metal surface of the first surface area with the first insulator comprises steps of:
filling the porous matrix with a filler;
removing the filler from the first surface area;
disposing the first insulator in the first surface area, so that at least the partial metal surface of the first surface area is clad with the first insulator; and
removing the remaining filler from the porous matrix.

25. The manufacturing method for a negative electrode sheet according to claim 24, wherein the step of filling the porous matrix with a filler comprises:
soaking the porous matrix in the liquid filler and removing gas from the porous matrix; and
curing the filler in the porous matrix.

26. The manufacturing method for a negative electrode sheet according to claim 24 or 25, wherein the step of removing the remaining filler from the porous matrix comprises:
transforming the remaining filler in the porous matrix into liquid, so that the filler is discharged from the porous matrix.

27. The manufacturing method for a negative electrode sheet according to any one of claims 24-26, wherein the filler is a phase change material or a soluble polymer material.

28. The manufacturing method for a negative electrode sheet according to any one of claims 24-27, wherein before the step of filling the porous matrix with a filler, the manufacturing method for a negative electrode sheet further comprises:
cleaning the porous matrix; and/or
after removing the remaining filler from the porous matrix, the manufacturing method for a negative electrode sheet further comprises:
cleaning the porous matrix.
